# EUROPEAN PATENT SPECIFICATION

(11) **EP 3 431 413 B1**
(45) Date of publication and mention of the grant of the patent: **25.03.2020**
(21) Application number: 18184145.3
(22) Date of filing: 18.07.2018
(51) Int. Cl.: B65D 75/12, B65D 85/60

(54) **CANDY IN ORIGINAL PACKAGE**
SÜSSIGKEITEN IN ORIGINALER VERPACKUNG
BONBON DANS SON EMBALLAGE D'ORIGINE

(30) Priority: 17.07.2017 RU 2017125473
(43) Date of publication of application: 23.01.2019
(73) Proprietor: "Grand Candy" Limited Liability Company, 0061 Yerevan (AM)
(72) Inventor: VARDANYAN, Karen, 0010 Yerevan (AM)
(74) Representative: Novagraaf Technologies

(56) References cited:
- EP-A1- 0 349 841
- FR-A5- 2 221 006
- US-A- 2 082 671

## Description

### Technical Field

The present invention generally relates to the food industry, and in particular to the confectionery industry, and can be used for production of confectionery products having various fillings, including chocolate filling.

### Background

Different solutions for confections are known from the prior art; Russian patent publication RU2568564, IPC B65D5/42, published on 20.11.2015 discloses a food package containing a food product, in the form of a candy wrap with a candy inside of it.

A food package with a shaped chocolate inside is known from German utility model DE1947463, published in 1966. DE1947463 discloses a food package and a shaped candy representing a "bunny" or "Santa Claus" figure, wherein the food package is made of a transparent solid material, ornamented with complete and stylized depictions of plants, decorations, flowers, and other similar decor elements. The shaped candy in the form of a "bunny" or "Santa Claus" is freely placed inside the package and is held in place by the sealed ends of the food package. The shaped candy combines with the decor elements on the food package to form an overall appearance. Document EP0349841A1 discloses a candy wrapped in a wrap produced from a plastic film by connecting the side faces and the end faces of the wrap.

Drawbacks of known solutions include a complicated manufacturing process, an inability to use shapes and colors of the wrapped candy as a base for shapes and colors of the image on the food package due to misalignment between the candy and the food package, and, accordingly, increased printing material consumption necessary to create an image on the food package. Another drawback is that a candy can't be consumed without touching it when unwrapping.

An object of the present invention is to simplify the manufacturing process by reducing the number of food package decoration operations, such as printing and/or painting operations, by using the shapes and colors of the wrapped candy as a base for shapes and colors of the image on the food package, and consequently to reduce paint or printing ink consumption required to create an image on the food package. Other objects of the present invention are to improve the quality of the final stylized composite image by means of more exact alignment of the candy and the image fragments depicted on the food package, and to improve the hygienic properties of candy consumption.

### Summary of the invention

In accordance with one aspect of this invention, there is provided a candy comprising a ball-shaped candy body made from a candy mass and covered with a sugar glaze coating with the thickness of 0.5-2.5mm; a wrap produced of a transparent material having a stylized image thereon in which the said candy body is wrapped by connecting the side faces and the end faces of the wrap;
wherein the wrap comprises two transparent layers - an inner layer and an outer layer; on the inside of the outer layer and/or on the outside of the inner layer image fragments are printed and colored at least in one color and having a shape and dimensions corresponding to the respective fragments of the stylized image on the wrap; wherein the candy body is intended to create a three-dimensional configuration of the stylized image on the wrap, and a color of the glaze coating of the candy body forms a part of the color of the stylized image on the wrap, wherein the joint strength of the end faces of the wrap is lower than that of the side faces, so as the wrap can be opened from its end faces by applying pressure to the wrap and removing the candy body from the end faces by holding the outer surface of the wrap.

There are also other possible embodiments of the invention where it is desired:
- to use two candy bodies,
- to use three candy bodies,
- to connect the side face and the end faces of the wrap by heat sealing and to serrate end faces by cutting,
- to make the wrap inner and outer layers of transparent films.

Other features and aspects of this invention will be apparent from the following description and the accompanying drawings.

### Brief description of the drawings

Embodiments of the invention will now be described with reference to the accompanying drawings, in which:
Fig. 1 shows a flat wrap pattern.
Fig. 2 shows a top view of Fig. 1.
Fig. 3 shows a side view of Fig. 1.
Fig. 4 shows a sectional view of a candy body.
Fig. 5 shows a front-side view of the composition with one ball-shaped candy body.
Fig. 6 shows a rear-side view of the composition with one ball-shaped candy body.
Fig. 7 shows a flat wrap pattern for two candy bodies.
Fig. 8 shows a front-side view of the composition with two ball-shaped candies.
Fig. 9 shows a rear-side view of the composition with two ball-shaped candy bodies.
Fig. 10 shows a flat wrap pattern for three candy bodies.
Fig. 11 shows a front-side view of the composition with three ball-shaped candy bodies.
Fig. 12 shows a rear-side view of the composition with three ball-shaped candy bodies.
Fig. 13 shows examples of composing a candy according to the present invention.

### Detailed description

The present invention is illustrated by specific embodiments shown on the figures which, however, are not intended to be exhaustive, but clearly demonstrate how the desired technical effect can be achieved with the claimed set of features.

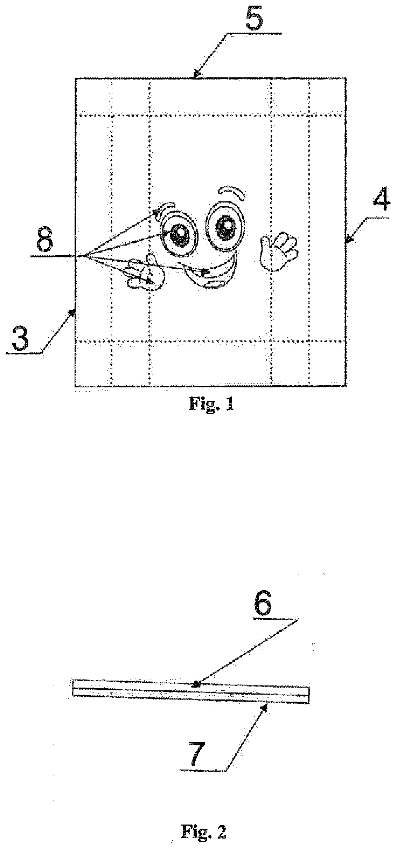

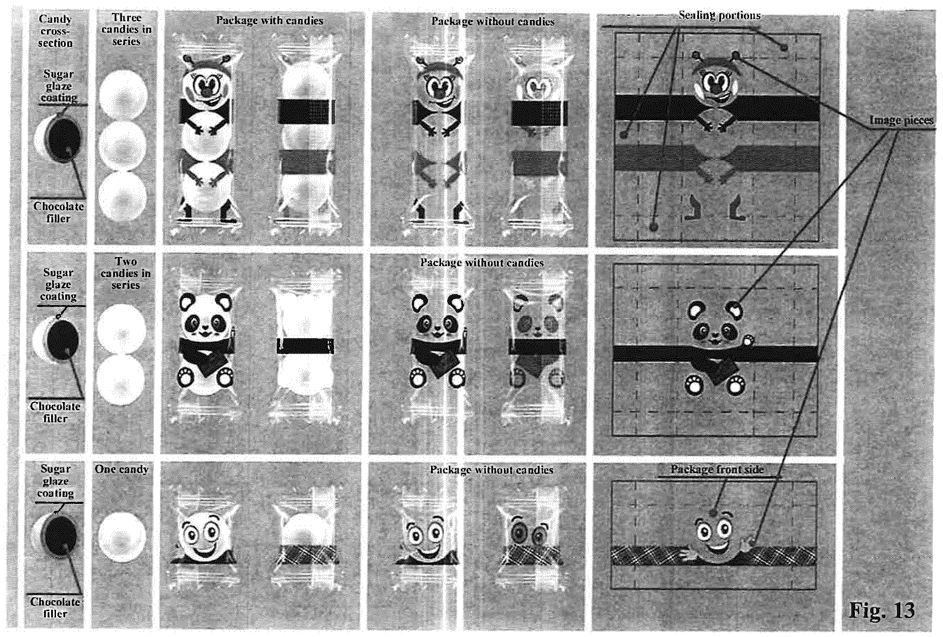

According to the invention (Figs. 1-13), a candy comprises a candy body 1 which is a candy mass of a desired shape and covered with a glaze coating 2. The candy body 1 may be formed of chocolate. A food package in the form of a wrap 3 is made of a transparent material in which the candy body 1 is wrapped by connecting a side face 4 and end face 5 of the wrap 3. The wrap 3 consists of two layers 6, 7, namely an inner layer and an outer layer, respectively. At least one image fragment 8 is formed on the inside of the outer layer 7 and/or on the outside of the inner layer 6, each image fragment 8 being colored in at least one color and having a shape and dimension to form respective fragments of a stylized image on the wrap 3. At least one candy body 1 is used which is made ball-shaped and is intended to create a three-dimensional configuration of the stylized image on the wrap 3. The color of the glaze coating 2 of the candy body 1 is visible through the transparent material and forms a part of the color of the stylized image on the wrap 3. This color part can be the base of the stylized image.

The end faces 5 of the wrap are formed with a lower joint strength than that of the side faces 4, so the wrap 3 can be opened from the end face 5 by applying pressure to the wrap 3 and removing the candy body 1 from the end face 5 while holding the outer surface of the wrap 3.

The described embodiment of the invention makes it possible to reduce the number of printing/painting operations and the quantity of coloring material such as printing ink or paint. In addition, placing image fragments between the inner and outer layers 6, 7 inside the wrap 3 prevents the coloring material from coming into contact with the candy or the consumer when consuming the candy.

In embodiments of this invention it may be desirable to form a product in the likeliness of a fairy-tale character or various animals' figures. To achieve this, one, two or three ball-shaped candy bodies 1 can be used and covered with a (sugar) glaze coating 2 having a thickness in the range between 0.5 to 2.5 mm, which is specified by organoleptic properties of the candy taking into account strength properties of the candy mass or chocolate and/or filling 9. The lower thickness limit of the glaze coating 2 is determined by the requirement to retain the shape of the candy, while the upper limit of the glaze coating 2 is determined by candy taste properties. A glaze coating 2 with a thickness below 0.5 mm may hinder ball-shape retention during a long period of storage, while a thickness above 2.5 mm may cause a taste imbalance between the glaze coating and the candy mass and/or chocolate forming the candy body 1.

The said stylized image fragments 8 are placed on the inside of the outer layer 7 and/or the outside of the inner layer 6 by printing or painting, such that the printing or painting does not come into contact with the candy.

The joint strength of the wrap end faces 5 is lower than that of its side face 4. As a result of such configuration, the wrap 3 can be opened by applying pressure to the candy and removing the candy body 1 from the end faces 5 without touching it with fingers, as if pressing it out, for example, pulling the candy with teeth without contacting the coloring material such as printing ink or paint.

The side and end faces 4, 5 of the wrap 3 are joined by heat sealing, and the end faces 5 are serrated by means of cutting, which aids in easily removing the candy from the wrap 3.

To maintain high organoleptic properties of candy for longer service life, the inner layer 6 and the outer layer 7 of the wrap 3 are made of transparent film.

### Example of embodiment of the invention.

At first, a two-layered wrap 3 is formed, wherein on the inside of the outer layer and/or on the outside of the inner layer paint layers are applied to form fragments, the shape and dimensions of which correspond to those of the stylized image on the wrap 3 design; for instance, they can represent brows, eyes, a scarf or mittens, etc., which individually cannot represent a complete image of the wrap design, e.g., the image of a "Panda" bear cub, or "Roly-Poly", or a Russian nesting doll, or any other character. These fragments are printed either single-colored, e.g., with a black paint on a transparent background or with colored paints, namely, on a transparent wrap background, the fragments have white, green, red and other colors. After that, the wrap is rolled-up by overlapping and heat-sealing side faces on the portion 10 to form a hollow space inside. One, two or three ball-shaped candy bodies 1 are placed inside this hollow space, and the quantity of candy bodies 1 is determined by the type of the final confectionery product. Due to its ball-shape, the candy body 1 can be exactly aligned with the painted fragments on the wrap 3 and for that wrap 3 portions on end faces are heat sealed, too, on the portion 11 so that the candy body 1 is fixed in the hollow space to form the final character of the design of the confectionery product. For this reason, as was mentioned above, a candy body 1 is made in the form of at least one three-dimensional element substantially in the form of a ball. The candy bodies 1 are arranged in the hollow space of the wrap 3 in series to form a stylized image of the character on the wrap, e.g., the character of "Roly-Poly", a bear cub, or a Russian nesting doll, or a green caterpillar. For this reason, the candy body 1 is covered with a colored sugar glaze coating 2, the color of which is a base for the image on the wrap 3: e.g., for the character of "Roly-Poly" or "the Sun", the coating is made yellow, for the character of a Russian nesting doll it is light-orange, for the character of a "Panda" bear cub it is white and for the character of a caterpillar it is green, etc.

Individually, neither the wrapped candies nor the stylized image fragments of the design on the wrap, can create a complete character. However, when the candy bodies are positioned in the wrap 3, the candy bodies 1 together with the stylized image fragments on the wrap 3 form a complete image.

As a result, a candy in an original wrap is obtained which substantially represents a 3D format toy for a specific purpose, e.g. a toy in the likeness of a favorite fairy-tale or an animated character, such as "Roly-Poly", "the Sun", a "Panda" bear cub, the "Snowman", "Santa Clause", or a toy having an educational purpose related to the insect world, in particular, the character of a green caterpillar or other characters, or in the likeness of a little man.

To increase the ease of removing the candy from the wrap and for hygienic consumption of the candy, the joint strength of the end faces of the wrap 3 is lower than that of its side faces so as the wrap 3 can be opened by applying pressure to it from the side and removing the candy from the end faces without touching it with fingers. Moreover, the multiple layers of the wrapping ensure retention of organoleptic characteristics of the candy for a long period of storage and transportation, as well as during its consumption by a consumer when he or she holds a candy in his or her hands or in a pocket of his or her clothes. In other words, such candy retains its shape and taste properties.

### Possible embodiments of the confectionery product:

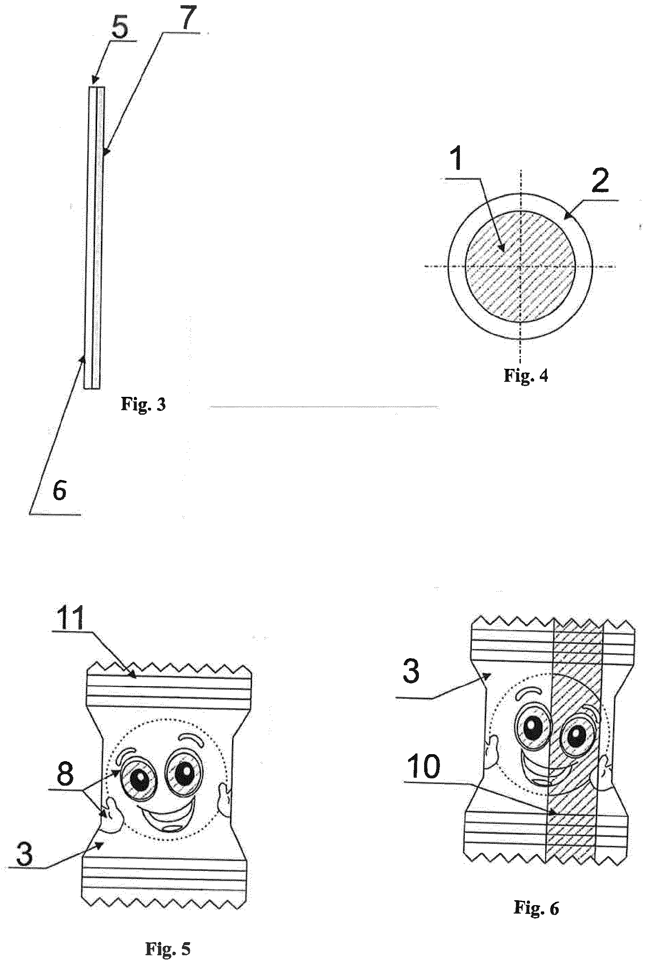

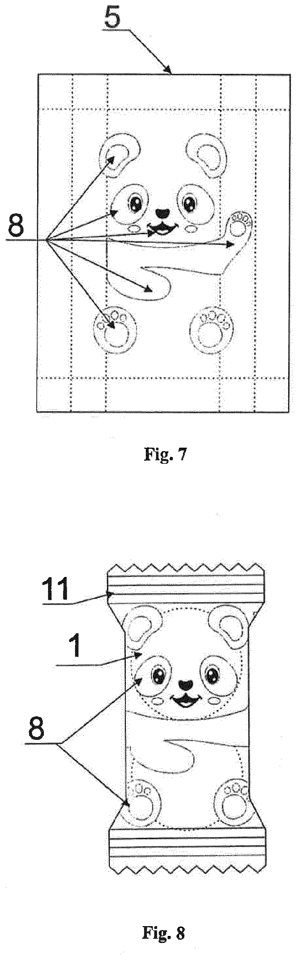

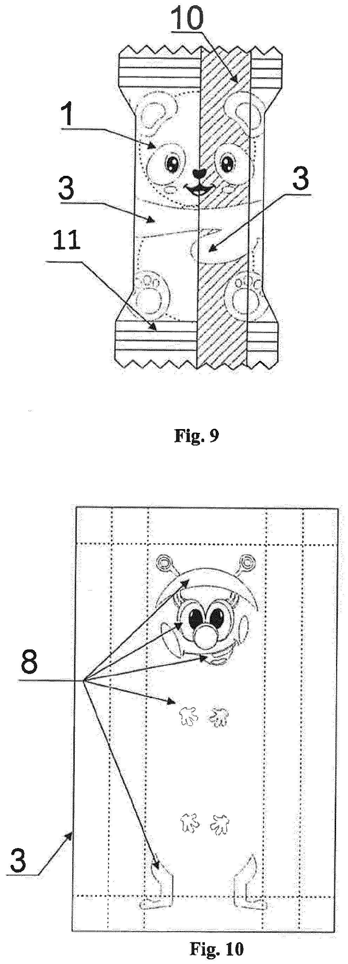

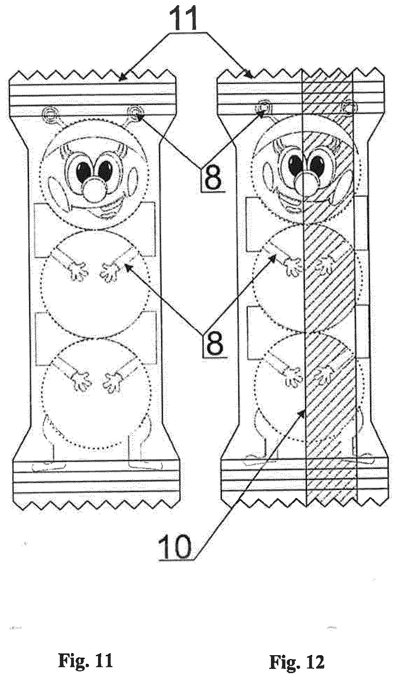

- a candy body 1 (Fig. 5, 6) is made in the form of one ball covered with a yellow sugar glaze coating to create a stylized image of a fairy-tale character "Roly-Poly" or "the Sun";
- a candy body 1 (Fig. 8, 9) can be made in the form of two balls covered with a white sugar glaze coating to create a stylized image of a fairy-tale character "Snowman", "Santa Clause" or stylized images of animals, such as "Panda" bear cub, or stylized image of a little man;
- a candy body 1 (Fig. 11, 12) can be made in the form of three balls covered with a green sugar glaze coating to create a stylized image of a "caterpillar".

The present invention intended for production of a candy in the form of a body 1 in a wrap 3 covered with a glaze coating 2 makes it possible to simplify manufacturing of the wrapped candy by reducing the printing/painting operations and quantity of printing ink/paint needed to form an image, and to improve significantly the hygienic properties of candy consumption.

## Claims

1. A candy comprising a ball-shaped candy body (1) wrapped in a wrap (3) by connecting the side faces (4) and the end faces (5) of the wrap (3), **characterised in that** the candy body (1) is made from a candy mass and covered with a sugar glaze coating (2) with the thickness of 0.5 to 2.5mm; and the wrap (3) is produced of a transparent material having a stylized image thereon;
wherein the wrap (3) comprises two transparent layers (6, 7) comprising an inner layer (6) and an outer layer (7);
wherein image fragments are printed on the inside of the outer layer (7) and/or on the outside of the inner layer (6), said image fragments being colored at least in one color and having a shape and dimensions corresponding to the respective fragments of the stylized image on the wrap (3);
wherein the candy body (1) is intended to create a three-dimensional configuration of the stylized image on the wrap (3), and a color of the glaze coating (2) of the candy body (1) forms a part of the color of the stylized image on the wrap (3),
wherein the joint strength of the end faces (5) of the wrap (3) is lower than that of the side faces (4), so as the wrap (3) can be opened from its end faces (5) by applying pressure to the wrap (3) and removing the candy body (1) from the end faces (5) by holding the outer surface of the wrap (3).

2. The candy in accordance with the claim 1, **characterized in that** two candy bodies (1) are used.

3. The candy in accordance with the claim 1, **characterized in that** three candy bodies (1) are used.

4. The candy in accordance with the claim 1, **characterized in that** the side faces (4) and the end faces (5) of the wrap (3) are connected by heat-sealing, wherein the end faces (5) are serrated by means of cutting.

## Patentansprüche

1. Süßware, die einen kugelförmigen Süßwarenkörper (1) umfasst, der in eine Hülle (3) gehüllt wird, indem die Seitenflächen (4) und die Endflächen (5) der Hülle (3) verbunden werden, **dadurch gekennzeichnet, dass** der Süßwarenkörper (1) aus einer Süßwarenmasse angefertigt und mit einer Zuckerglasurschicht (2) mit der Dicke von 0,5 bis 2,5 mm überzogen ist; und die Hülle (3) aus einem transparenten Material produziert ist, das ein stilisiertes Bild auf demselben aufweist;
wobei die Hülle (3) zwei transparente Lagen (6, 7) umfasst, die eine innere Lage (6) und eine äußere Lage (7) umfassen;
wobei auf der Innenseite der äußeren Lage (7) und/oder auf der Außenseite der inneren Lage (6) Bildfragmente aufgedruckt sind, wobei die Bildfragmente mindestens in einer Farbe gefärbt sind und eine Form und Abmessungen aufweisen, die den jeweiligen Fragmenten des stilisierten Bildes auf der Hülle (3) entsprechen;
wobei der Süßwarenkörper (1) dazu vorgesehen ist, einen dreidimensionalen Aufbau des stilisierten Bildes auf der Hülle (3) zu erzeugen, und eine Farbe der Glasurschicht (2) des Süßwarenkörpers (1) einen Teil der Farbe des stilisierten Bildes auf der Hülle (3) bildet,
wobei die Verbindungsfestigkeit der Endflächen (5) der Hülle (3) geringer ist als jene der Seitenflächen (4), sodass die Hülle (3) von ihren Endflächen (5) her durch Aufbringen von Druck auf die Hülle (3) und Entnehmen des Süßwarenkörpers (1) aus den Endflächen (5) durch Festhalten der äußeren Oberfläche der Hülle (3) geöffnet werden kann.

2. Süßware nach Anspruch 1, **dadurch gekennzeichnet, dass** zwei Süßwarenkörper (1) verwendet werden.

3. Süßware nach Anspruch 1, **dadurch gekennzeichnet, dass** drei Süßwarenkörper (1) verwendet werden.

4. Süßware nach Anspruch 1, **dadurch gekennzeichnet, dass** die Seitenflächen (4) und die Endflächen (5) der Hülle (3) durch Heißversiegeln verbunden werden, wobei die Endflächen (5) mittels Schneiden gezackt werden.

## Revendications

1. Bonbon comprenant un corps de bonbon (1) sphérique enveloppé dans une enveloppe (3) en reliant les faces latérales (4) et les faces d'extrémité (5) de l'enveloppe (3), **caractérisé en ce que** le corps de bonbon (1) est réalisé à partir d'une masse de bonbon et recouvert d'un enrobage de glaçage (2) au sucre dont l'épaisseur est de 0,5 à 2,5 mm ; et l'enveloppe (3) est fabriquée avec un matériau transparent ayant une image stylisée sur celui-ci ;
dans lequel l'enveloppe (3) comprend deux couches transparentes (6, 7) comprenant une couche intérieure (6) et une couche extérieure (7) ;
dans lequel des fragments d'image sont imprimés sur l'intérieur de la couche extérieure (7) et/ou sur l'extérieur de la couche intérieure (6), lesdits fragments d'image étant colorés au moins d'une couleur et ayant une forme et des dimensions correspondant aux fragments respectifs de l'image stylisée sur l'enveloppe (3) ;
dans lequel le corps de bonbon (1) est destiné à créer une configuration tridimensionnelle de l'image stylisée sur l'enveloppe (3), et une couleur de l'enrobage de glaçage (2) du corps de bonbon (1) forme une partie de la couleur de l'image stylisée sur l'enveloppe (3),
dans lequel la résistance de jonction des faces d'extrémité (5) de l'enveloppe (3) est inférieure à celle des faces latérales (4), de sorte que l'enveloppe (3) puisse être ouverte par ses faces d'extrémité (5) en appliquant une pression à l'enveloppe (3) et en retirant le corps de bonbon (1) par les faces d'extrémité (5) en tenant la surface extérieure de l'enveloppe (3).

2. Bonbon selon la revendication 1, **caractérisé en ce que** deux corps de bonbon (1) sont utilisés.

3. Bonbon selon la revendication 1, **caractérisé en ce que** trois corps de bonbon (1) sont utilisés.

4. Bonbon selon la revendication 1, **caractérisé en ce que** les faces latérales (4) et les faces d'extrémité (5) de l'enveloppe (3) sont reliées par thermoscellage, dans lequel les faces d'extrémité (5) sont dentelées par découpe.
